# FASCICULE DE BREVET EUROPEEN

(11) **EP 4 313 651 B1**
(45) Date de publication et mention de la délivrance du brevet: **12.02.2025**
(21) Numéro de dépôt: 22715655.1
(22) Date de dépôt: 21.03.2022
(51) Int. Cl.: B60K 13/04

(54) **SUSPENTE DE LIGNE D'ÉCHAPPEMENT D'UN VÉHICULE**
AUSPUFFSTRANGAUFHÄNGUNG EINES FAHRZEUGS
EXHAUST LINE SUSPENSION OF A VEHICLE

(30) Priorité: 03.05.2021 FR 2104636
(43) Date de publication de la demande: 07.02.2024
(73) Titulaire: La Societe "S.A.C.R.E.D", 28350 Saint-Lubin-des-Joncherets (FR)
(72) Inventeur: DE LARMINAT, Alain, 78120 RAMBOUILLET (FR)
(74) Mandataire: Cabinet Laurent & Charras
(86) Numéro de dépôt international: PCT/FR2022/050515
(87) Numéro de publication internationale: WO 2022/234197

(56) Documents cités:
- WO-A1-2018/099706
- DE-C1- 19 741 462
- DE-U1- 202007 009 070

## Description

### Domaine technique

L'invention se rapporte au domaine technique de l'automobile, et en particulier des pièces de liaisons utilisées pour relier la ligne d'échappement à la caisse d'un véhicule.

### Art antérieur

Lorsqu'un véhicule roule, il est soumis à des accélérations selon un axe vertical dues aux irrégularités de la route sur laquelle il roule. La ligne d'échappement est donc elle aussi soumise à de telles accélérations. Afin que la liaison entre la suspente et la caisse ne soit pas détériorée, il est connu de réaliser des suspentes comprenant un amortisseur permettant d'absorber les mouvements de la ligne d'échappement par rapport à la caisse.

Ces mouvements sont orientés :
- principalement selon une direction verticale en fonction des irrégularités de la surface de roulement de la route empruntée ;
- dans une moindre mesure selon une direction transversale en fonction des accélérations centrifuges auxquelles est soumise la ligne d'échappement lorsque le véhicule effectue des virages ;
- et également selon une direction longitudinale lorsque le véhicule accélère ou décélère le long de son parcours.

Il est connu de l'art antérieur différentes solutions pour relier avec amortissement une ligne d'échappement d'un véhicule automobile à la caisse de ce véhicule.

Le document EP1378639 décrit une suspente comprenant une armature en tôle emboutie, et sur laquelle est surmoulée un corps en élastomère jouant un rôle d'amortisseur entre les mouvements de la ligne d'échappement et ceux de la caisse.

Cependant, cette solution ne donne pas satisfaction car les étapes de fabrication de cette suspente sont nombreuses. Son montage sur le véhicule n'est pas facilité.

De plus, avec ce type de suspente les déplacements de la ligne d'échappement par rapport à la caisse ne sont pas suffisamment limités au vu des déplacements oscillatoires de la ligne d'échappement par rapport à la caisse. Cette suspente comprend une butée collée sur l'armature, ce qui implique deux étapes de fabrication supplémentaires : la préparation de l'armature (adhérisation), puis le collage de la butée sur l'armature.

FR3086331 décrit une autre suspente comprenant un corps amortisseur surmoulé. Dans ce document cependant, la butée est obtenue par contact de deux parties du corps amortisseur l'une contre l'autre. La butée obtenue n'est donc pas précise en position, le corps amortisseur étant par nature déformable. Par ailleurs, la fixation de cette suspente à la caisse du véhicule peut être améliorée.

Une autre suspente de liaison d'une ligne d'échappement d'un véhicule à une caisse du véhicule est connue du document DE 20 2007 009070 U1.

Enfin, aucune de ces solutions n'est optimisée pour limiter la masse embarquée sur le véhicule, ce qui a un impact sur la consommation de carburant.

### Exposé de l'invention

L'un des buts de l'invention est de pallier les inconvénients de l'art antérieur en proposant une suspente pour ligne d'échappement qui soit simple à fabriquer, à installer, performante en utilisation, et dont la masse est réduite.

À cet effet, il a été mis au point une suspente de liaison d'une ligne d'échappement d'un véhicule à une caisse dudit véhicule, comme définie dans la revendication 1, la suspente comprenant :
- une armature ;
- un corps amortisseur réalisé en matériau élastomère et présentant une partie oscillante destinée à recevoir une attache d'une ligne d'échappement et à se déplacer élastiquement par rapport à l'armature pour amortir des déplacements de la ligne d'échappement ;
- des moyens de fixation de la suspente à la caisse du véhicule.

Selon l'invention, l'armature est surmoulée sur une partie des moyens des moyens de fixation, et le corps amortisseur est surmoulé sur l'armature.

De cette manière, la suspente est obtenue en un nombre d'étapes particulièrement réduit, et automatisables.

De plus, les moyens de fixations étant directement inclus dans la suspente, sa pose sur un véhicule est facilitée.

Selon l'invention, le corps amortisseur surmoulé présente un fourreau qui entoure une partie de l'armature. Par fourreau, on signifie que cette partie entoure la section de l'armature, en étant présente de part et d'autre de l'armature, du côté de la surface interne et de celui de la surface externe. Le fourreau constitue une liaison mécanique efficace avec l'armature pour transmettre des efforts dans toutes les directions, aussi bien en poussée qu'en traction. Cela permet d'obtenir une très bonne tenue mécanique du corps amortisseur sur l'armature, tout en évitant de coller par adhérisation le corps amortisseur sur l'armature.

De préférence, le corps amortisseur surmoulé recouvre partiellement l'armature, ce qui permet de laisser apparentes certaines parties de l'armature, et de réaliser une économie de poids en ne fabriquant le corps amortisseur qu'à sa dimension nécessaire. Les parties laissées apparentes peuvent constituer des butées venant limiter les déplacements de la ligne d'échappement par rapport à la caisse du véhicule. Au surplus, ces butées sont franches, c'est-à-dire que le contact est fait entre une partie du corps amortisseur, réputé souple, et une partie de l'armature, réputée plus rigide que le corps amortisseur. La position d'arrêt est donc mieux maîtrisée.

Afin de limiter les déplacements de la ligne d'échappement selon une direction et dans les deux sens, l'armature comprend au moins deux butées franches d'arrêt des déplacements de la partie oscillante du corps amortisseur.

Afin de limiter davantage la masse de la suspente, l'armature est réalisée en matière plastique.

Selon un mode de réalisation préféré, l'armature est périphérique et définit un espace intérieur, la partie oscillante du corps amortisseur est positionnée dans l'espace intérieur, et de préférence l'armature présente des parties en saillie assurant le maintien du corps amortisseur surmoulé sur l'armature. La conception obtenue se prête naturellement au surmoulage.

Afin de garantir la rigidité et la solidité de l'armature tout en limitant sa masse, l'armature est de forme cylindrique avec des nervures radiales, par exemple définissant une section en forme de T, U, H.

Avantageusement, la partie oscillante se présente sous la forme d'un manchon axial relié par au moins deux, et de préférence quatre bras de suspension, à la partie périphérique du corps amortisseur, ou relié à deux fourreaux diamétralement opposés. Les bras de suspension confèrent à la suspente la dynamique et l'amortissement recherchés. Le nombre de deux et de préférence quatre bras permet de rationaliser la section des bras, afin d'optimiser les temps de cuisson du matériau du corps amortisseur lors du surmoulage.

Afin de combiner les avantages des caractéristiques techniques précitées, l'armature présente des ouvertures traversées par les bras de suspension.

L'invention concerne également un procédé de fabrication d'une suspente destinée à relier une ligne d'échappement d'un véhicule à une caisse dudit véhicule, comme défini dans la revendication 10, la suspente comprenant :
- une armature ;
- un corps amortisseur réalisé en matériau élastomère et présentant une partie oscillante destinée à recevoir une attache d'une ligne d'échappement et à se déplacer élastiquement par rapport à l'armature pour amortir des déplacements de la ligne d'échappement ;
- des moyens de fixation de la suspente à la caisse du véhicule.

Selon l'invention, le procédé comprend des étapes successives suivantes :
- surmoulage de l'armature sur les moyens de fixation ;
- surmoulage du corps amortisseur sur l'armature, le corps amortisseur présentant un fourreau entourant une partie de l'armature.

De cette manière, le procédé de fabrication de la suspente est extrêmement simple, rapide, et peu onéreux.

### Brève description des dessins

[Fig.1] est une vue en perspective, vue de dessus, d'un exemple d'une suspente qui ne représente pas l'invention.
[Fig.2] est une vue en perspective de moyens de fixation d'une telle suspente.
[Fig.3] est une vue en perspective d'une étape de fabrication d'une telle suspente.
[Fig.4] est une vue en perspective, en coupe, d'un exemple d'une suspente qui ne représente pas l'invention.
[Fig.5] est une autre vue en perspective, en coupe, d'une telle suspente.
[Fig.6] est une autre vue en perspective, en coupe, d'une telle suspente.
[Fig.7] est un schéma de face d'une suspente selon l'invention.
[Fig.8] est un schéma de face d'une autre suspente selon l'invention.
[Fig.9] est un schéma de face d'un exemple d'une suspente qui ne représente pas l'invention.

### Description détaillée de l'invention

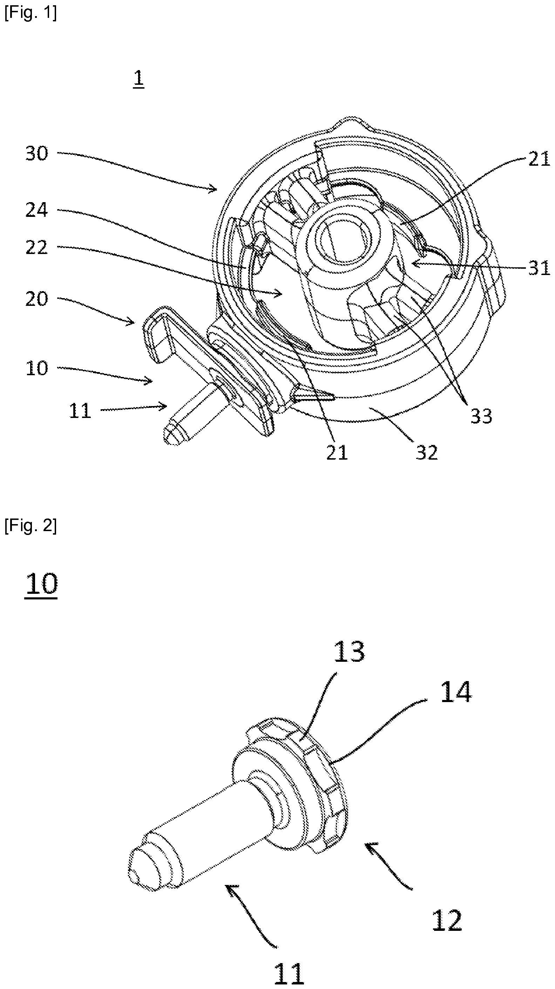

En référence à la figure 1 qui en illustre un exemple qui ne représente pas l'invention, l'invention concerne une suspente (1) pour ligne d'échappement de véhicule, par exemple une voiture, comprenant principalement des moyens de fixation (10), une armature (20) et un corps amortisseur (30).

Les moyens de fixation (10) sont de préférence une vis telle qu'illustrée figure 2, mais il peut également s'agir d'un axe lisse configuré pour recevoir une goupille, ou de tout type de moyen de fixation adapté

Dans le mode de réalisation préféré illustré, les moyens de fixation (10) comprennent une première partie (11) filetée et destinée à être reliée à la caisse du véhicule, et une seconde partie (12) destinée à être recouverte par l'armature (20) lors d'une première opération de surmoulage. La seconde partie (12) présente à cet effet une géométrie adaptée, avec des lobes (13) répartis angulairement ainsi que des épaulements (14) reliant la base des lobes (13). Ces formes permettront de renforcer la liaison mécanique entre les moyens de fixation (10) et de l'armature (20) qui viendra être surmoulée par-dessus.

Les moyens de fixation (10) sont réalisés en matériau adapté à leur fonction mécanique, par exemple du métal et plus précisément en acier.

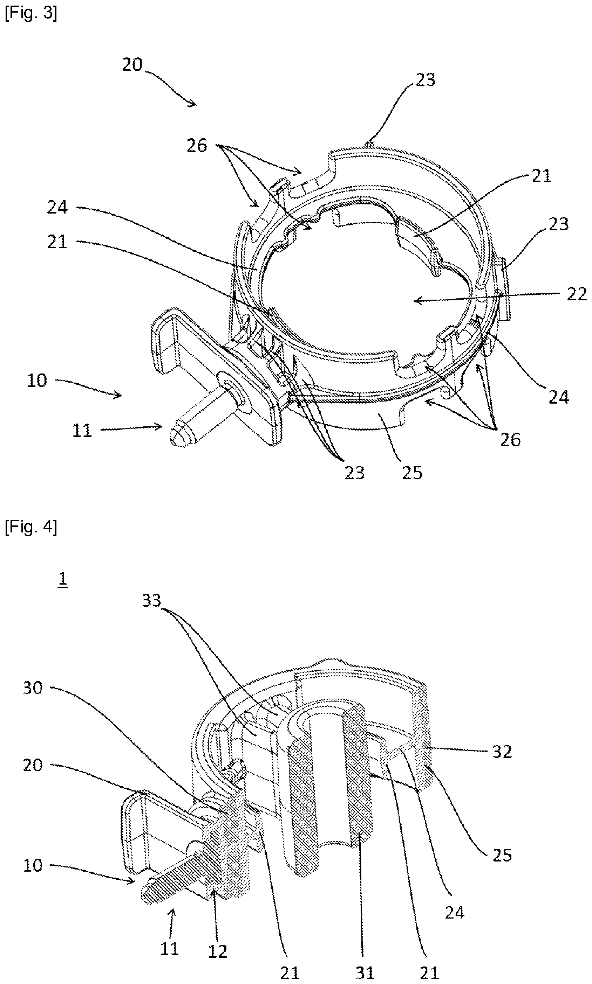

L'armature (20) illustrée figure 3 est obtenue par une première étape de surmoulage qui consiste à former ladite armature (20) par-dessus les moyens de fixation (10). L'armature (20) est réalisée de préférence en plastique tel que du Polyamide 66 chargé, et adapté pour résister aux agressions extérieures.

L'armature (20) présente une base plane recevant les moyens de fixation (10), cette base plane est destinée à venir en contact de la caisse du véhicule. La base plane présente une partie en saillie destinée à bloquer la rotation de la suspente (1) lorsque les moyens de fixation (10) sont assemblés avec la caisse.

L'armature (20) présente une forme générale cylindrique, avec une surface externe (25) périphérique et définissant en son centre un espace intérieur (22). Une nervure (24) donne une forme de « T » à la section transverse du cylindre obtenu. Cette section pourrait être d'une autre forme, par exemple en « U », en « H » en « L », l'objectif de cette rainure étant de conférer à l'armature (20) la résistance mécanique nécessaire, tout en limitant la masse de la suspente (1). Cette nervure (24) participe également au maintien du corps amortisseur (30), notamment en bloquant la partie périphérique (32) du corps amortisseur (30).

Des nervure (23) sont disposées à différents endroits de l'armature (20) afin de renforcer la liaison mécanique entre l'armature (20) et le corps amortisseur (30) qui viendra ensuite être surmoulé par-dessus. Certaines nervures (23) sont de préférence agencées sur la surface externe (25) de la forme cylindrique de l'armature (20).

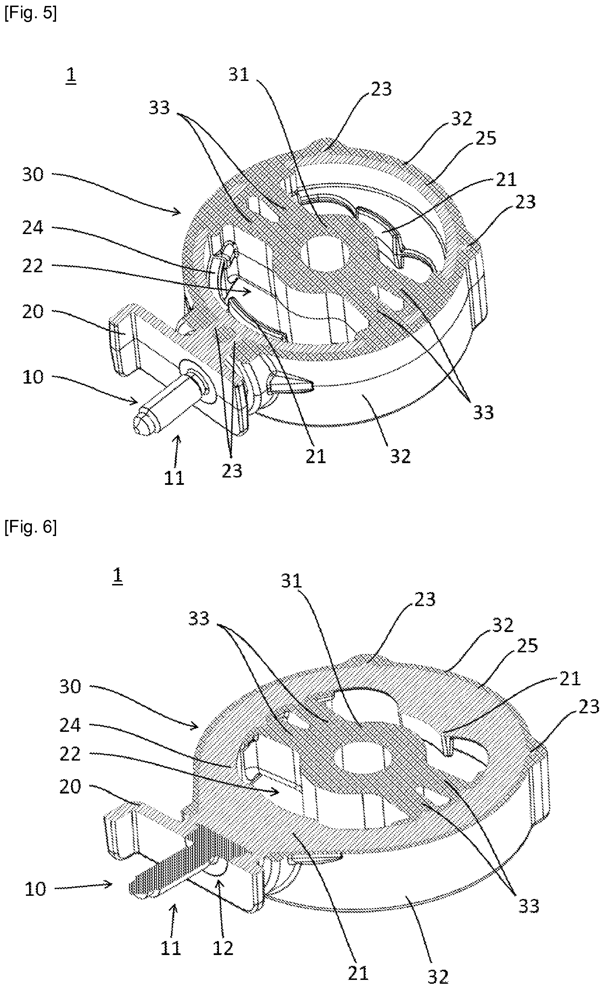

En référence aux figures 1, 4, 5 et 6, le corps amortisseur (30) est ensuite surmoulé sur l'armature (20). Le corps amortisseur (30) est réalisé en matériau élastomère, tel que de l'éthylène-propylène-diène monomère ou « EPDM ».

Le corps amortisseur (30) comprend une partie périphérique (32) recouvrant la surface externe (25) de l'armature (20). Dans le cas où la partie périphérique (32) recouvre toute la circonférence de la surface externe (25), à la manière d'un pneu sur une jante, le corps amortisseur (30) est ainsi parfaitement solidarisé avec l'armature (20), même lorsque la ligne d'échappement et la caisse du véhicule sont soumis à des mouvements relatifs que doit absorber la suspente (1).

Dans le cas où elle ne recouvre pas l'intégralité de la circonférence de la surface externe (25), la partie périphérique (32) confère néanmoins au corps amortisseur (30) une bonne cohésion avec l'armature (20), et est en particulier résistante à la traction exercée par des bras (33) dont le fonctionnement est détaillé ci-après.

L'armature (20) présente des encoches ou ouvertures (26) visibles figure 3 au travers de sa surface externe (25). Ces ouvertures (26) sont configurées pour que, lors du surmoulage du corps amortisseur (30), de la matière s'écoule à travers ces ouvertures (26) et vienne former dans l'espace intérieur (22) de l'armature (20) une partie oscillante (31) de forme générale cylindrique, et destinée à être assemblée avec la ligne d'échappement au moyen d'un orifice présent en son centre.

Des bras de suspension (33) relient alors la partie périphérique (32) ou les fourreaux (36) à la partie oscillante (31). La géométrie de ces bras (33) est étudiée pour leur conférer les caractéristiques élastiques et dynamiques nécessaires à l'amortissement des oscillations de la partie oscillante (31).

Les ouvertures (26) de l'armature (20) permettent donc de combiner les avantages techniques précités, en permettant de disposer d'un corps amortisseur (30) qui soit, premièrement, suspendu par des bras (33), et deuxièmement dont la tenue mécanique et le maintien sur l'armature (20) sont garantis par les fourreaux (36), ou par le recouvrement d'une partie périphérique (32), de préférence sur tout le pourtour d'une circonférence de l'armature (20).

Dans tous les cas, les bras (33) sont reliés à de la matière du corps amortisseur (30) qui est disposée à l'extérieur de la surface externe (25) de l'armature (20), qu'il s'agisse de fourreaux (36) et/ou d'une partie périphérique (32). Cette liaison se fait au droit des axes (33a) qui sont définis par la direction générale des bras (33), de manière que la partie oscillante (31) soit suspendue, et qu'une traction effectuée sur un bras (33) n'ait pas tendance à décoller le corps amortisseur de l'armature (20), comme dans les solutions de l'art antérieur qui nécessitent une adhérisation. Selon l'invention, une traction effectuée sur un bras (33) a au contraire tendance à plaquer le corps amortisseur (30) contre l'armature (20).

Cette conception permet donc de s'affranchir d'étapes complémentaires d'adhérisation entre le matériau du corps amortisseur (30) et le matériau de l'armature (20).

De préférence, les bras (33) sont disposés de façon sensiblement horizontale, de façon à ce qu'ils limitent les déplacements transversaux de la ligne d'échappement par rapport à la caisse, par leur résistance à la compression et à la traction selon leur direction d'allongement.

Le nombre de ces bras (33) est au moins égal à deux, et peut être variable. Le nombre de bras de suspension (33) a un impact direct sur leur géométrie, puisque plus les bras (33) sont nombreux plus leur section est réduite. Plus leur section est réduite, plus le temps de cuisson lors du surmoulage est faible.

Dans le mode de réalisation préféré, disposer quatre bras (33) permet d'obtenir un compromis intéressant entre leurs caractéristiques mécaniques et la durée de cuisson à opérer.

Le surmoulage du corps amortisseur (30) est partiel, dans le sens où certaines parties de l'armature (20) ne sont pas recouvertes. En particulier, des butées (21) sont laissées apparentes. Ces butées (21) servent à limiter les déplacements de la partie oscillante (31). Avantageusement, les butées (21) obtenues sont dites franches, car elles ne se déformeront pas sous le contact de la partie oscillante (31).

En effet, les butées (21) sont réalisées dans un matériau plastique rigide, dont le module d'Young est généralement compris en 0.4 et 6 GPa, alors que la partie oscillante (31) est réalisée en matériau élastomère, dont le module d'Young est généralement inférieur à 50MPa.

De plus, réaliser les butées (21) dans le matériau rigide de l'armature (20) permet de réaliser une économie de poids puisque moins de matériau est nécessaire pour obtenir la solidité attendue des butées (21).

La suspente (1) présente de préférence deux butées, afin de pouvoir limiter les déplacements de la partie oscillante (31) dans les deux sens sur une trajectoire verticale.

La suspente (1) selon l'invention est donc fabriquée en seulement deux étapes de surmoulage, ce qui présente un gain de productivité.

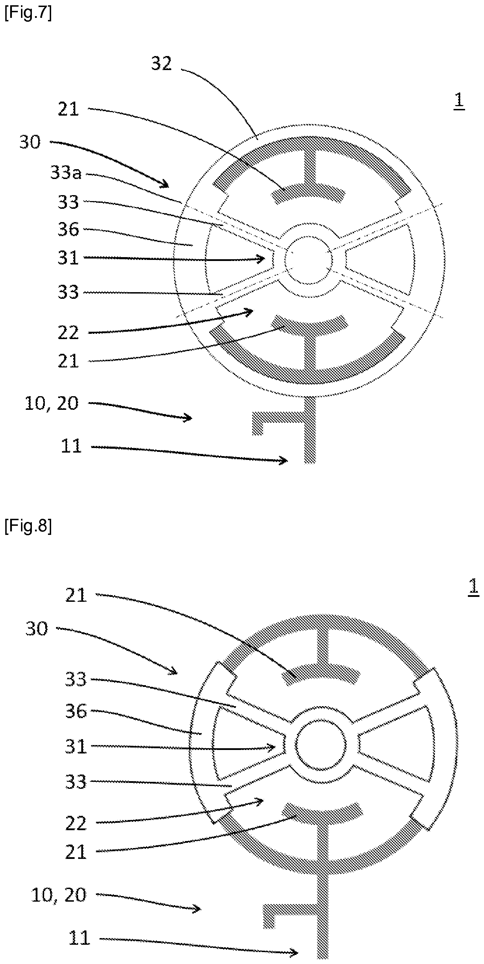

La partie périphérique (32) et le fourreau (36) participent chacun au bon maintien du corps surmoulé (30) sur l'armature (20). Ainsi, la suspente (1) selon l'invention peut présenter :
- soit une partie périphérique (32) ainsi qu'un, et de préférence deux fourreaux (36), tel qu'illustré aux figures 1 et 4 à 7 ;
- soit un, et de préférence deux fourreaux (36), mais pas de partie périphérique (32), tel qu'illustré à la figure 8.

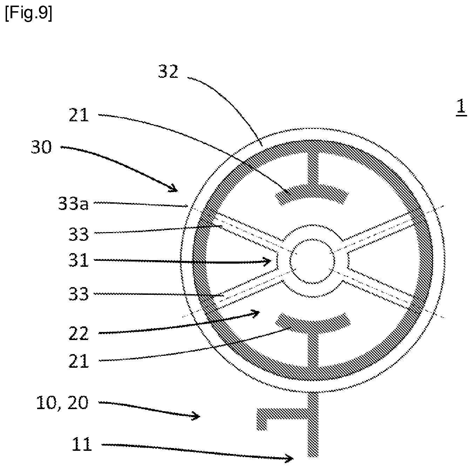

La figure 9 illustre un autre exemple d'une suspente ne représentant pas l'invention, avec une partie périphérique (32) mais pas de fourreau (36).

La figure 8 illustre un mode de réalisation comprenant deux fourreaux (36), diamétralement opposées, sans partie périphérique (32). Le nombre de fourreaux (36) n'est pas imposé, mais la présence d'au moins deux fourreaux (36) permet d'obtenir une bonne distribution des efforts au sein du corps amortisseur (30), ainsi qu'un bon comportement dynamique de la partie oscillante (31). Il serait par exemple possible de prévoir trois fourreaux (36) répartis à 120°.

La suspente (1) peut être conformé différemment des figures sans sortir du cadre de l'invention, qui est défini par les revendications. En particulier, les bras (33) ou la partie oscillante (31) peuvent être conformés différemment et être de tout type adapté à la présente application.

En variante non représentée, il y a des butées (21) sur l'axe transversal.

Selon une autre variante non représentée, il n'y a que deux bras (33).

Selon une autre variante non représentée, la partie périphérique (32) ne recouvre pas l'intégralité de la surface externe (25) de l'armature (20).

En outre, les caractéristiques techniques des différents modes de réalisation et variantes mentionnés ci-dessus peuvent être, en totalité ou pour certaines d'entre elles, combinées entre elles. Ainsi, la suspente (1) peut être adaptée en termes de coût, de fonctionnalités et de performance.

## Revendications

1. Suspente (1) de liaison d'une ligne d'échappement d'un véhicule à une caisse dudit véhicule, la suspente comprenant :
- une armature (20) ;
- un corps amortisseur (30) réalisé en matériau élastomère et présentant une partie oscillante (31) destinée à recevoir une attache d'une ligne d'échappement et à se déplacer élastiquement par rapport à l'armature (20) pour amortir des déplacements de la ligne d'échappement ;
- des moyens de fixation (10) de la suspente (1) à la caisse du véhicule ;
l'armature (20) est surmoulée sur une partie des moyens de fixation (10), et le corps amortisseur (30) est surmoulé sur l'armature (20), ***caractérisé en ce que*** le corps amortisseur (30) présente un fourreau (36) entourant une partie de l'armature (20).

2. Suspente selon la revendication 1, ***caractérisée en ce que*** le corps amortisseur (30) surmoulé recouvre partiellement l'armature (20).

3. Suspente selon la revendication 1, ***caractérisée en ce que*** l'armature (20) comprend au moins deux butées franches (21) d'arrêt des déplacements de la partie oscillante (31) du corps amortisseur (30).

4. Suspente selon la revendication 1, ***caractérisée en ce que*** l'armature (20) est réalisée en matière plastique.

5. Suspente selon la revendication 1, ***caractérisée en ce que*** l'armature (20) est périphérique et définit un espace intérieur (22), la partie oscillante (31) du corps amortisseur (30) est positionnée dans l'espace intérieur (22), et l'armature (20) présente des parties en saillie (23) assurant le maintien du corps amortisseur (30) surmoulé sur l'armature (20).

6. Suspente selon la revendication 4, ***caractérisée en ce que*** l'armature (20) est de forme cylindrique avec des nervures radiales (24), par exemple définissant une section en forme de T, U, H.

7. Suspente selon la revendication 4, ***caractérisée en* ce *que*** le corps amortisseur (30) comprend une partie périphérique (32) recouvrant la surface externe (25) de l'armature (20).

8. Suspente selon la revendication 6, ***caractérisée en* ce *que*** la partie oscillante (31) se présente sous la forme d'un manchon relié par au moins deux, et de préférence quatre, bras de suspension (33) à la partie périphérique (32) du corps amortisseur (30).

9. Suspente selon la revendication 7, ***caractérisée en* ce que** l'armature (20) présente des ouvertures (26) traversées par les bras de suspension (33).

10. Procédé de fabrication d'une suspente (1) destinée à relier une ligne d'échappement d'un véhicule à une caisse dudit véhicule, la suspente (1) comprenant :
- une armature (20) ;
- un corps amortisseur (30) réalisé en matériau élastomère et présentant une partie oscillante (31) destinée à recevoir une attache d'une ligne d'échappement et à se déplacer élastiquement par rapport à l'armature (20) pour amortir des déplacements de la ligne d'échappement ;
- des moyens de fixation (10) de la suspente (1) à la caisse du véhicule ;
le procédé étant ***caractérisé en* ce qu'**il comprend des étapes successives suivantes :
- surmoulage de l'armature (20) sur les moyens de fixation (10) ;
- surmoulage du corps amortisseur (30) sur l'armature (20) , le corps amortisseur (30) présentant un fourreau (36) entourant une partie de l'armature (20).

## Patentansprüche

1. Aufhängung (1) zur Verbindung einer Abgasleitung eines Fahrzeugs mit einem Fahrzeugkasten, wobei die Aufhängung umfasst:
- ein Gestell (20);
- einen Dämpfungskörper (30) aus Elastomermaterial, der einen schwingenden Teil (31) aufweist, der dazu bestimmt ist, eine Befestigung einer Abgasleitung aufzunehmen und sich elastisch relativ zum Gestell (20) zu bewegen, um Bewegungen der Abgasleitung zu dämpfen;
- Befestigungsmittel (10) zur Befestigung der Aufhängung (1) am Fahrzeugkasten; wobei das Gestell (20) auf einem Teil der Befestigungsmittel (10) umspritzt ist und der Dämpfungskörper (30) auf dem Gestell (20) umspritzt ist, **dadurch gekennzeichnet, dass** der Dämpfungskörper (30) eine Hülse (36) aufweist, die einen Teil des Gestells (20) umgibt.

2. Aufhängung nach Anspruch 1, **dadurch gekennzeichnet, dass** der umspritze Dämpfungskörper (30) das Gestell (20) teilweise bedeckt.

3. Aufhängung nach Anspruch 1, **dadurch gekennzeichnet, dass** das Gestell (20) mindestens zwei feste Anschläge (21) zur Begrenzung der Bewegungen des schwingenden Teils (31) des Dämpfungskörpers (30) umfasst.

4. Aufhängung nach Anspruch 1, **dadurch gekennzeichnet, dass** das Gestell (20) aus Kunststoff besteht.

5. Aufhängung nach Anspruch 1, **dadurch gekennzeichnet, dass** das Gestell (20) peripher ist und einen Innenraum (22) definiert, wobei der schwingende Teil (31) des Dämpfungskörpers (30) im Innenraum (22) positioniert ist und das Gestell (20) Vorsprünge (23) aufweist, die das Halten des umspritzen Dämpfungskörpers (30) auf dem Gestell (20) gewährleisten.

6. Aufhängung nach Anspruch 4, **dadurch gekennzeichnet, dass** das Gestell (20) zylindrisch geformt ist und radiale Rippen (24) aufweist, die beispielsweise einen T-, U- oder H-förmigen Querschnitt definieren.

7. Aufhängung nach Anspruch 4, **dadurch gekennzeichnet, dass** der Dämpfungskörper (30) einen peripheren Teil (32) umfasst, der die Außenfläche (25) des Gestells (20) bedeckt.

8. Aufhängung nach Anspruch 6, **dadurch gekennzeichnet, dass** der schwingende Teil (31) in Form einer Hülse vorliegt, die durch mindestens zwei, vorzugsweise vier, Aufhängungsarme (33) mit dem peripheren Teil (32) des Dämpfungskörpers (30) verbunden ist.

9. Aufhängung nach Anspruch 7, **dadurch gekennzeichnet, dass** das Gestell (20) Öffnungen (26) aufweist, durch die die Aufhängungsarme (33) hindurchgehen.

10. Verfahren zur Herstellung einer Aufhängung (1) zur Verbindung einer Abgasleitung eines Fahrzeugs mit einem Fahrzeugkasten, wobei die Aufhängung (1) umfasst:
- ein Gestell (20);
- einen Dämpfungskörper (30) aus Elastomermaterial, der einen schwingenden Teil (31) aufweist, der dazu bestimmt ist, eine Befestigung einer Abgasleitung aufzunehmen und sich elastisch relativ zum Gestell (20) zu bewegen, um Bewegungen der Abgasleitung zu dämpfen;
- Befestigungsmittel (10) zur Befestigung der Aufhängung (1) am Fahrzeugkasten;
wobei das Verfahren **dadurch gekennzeichnet ist, dass** es die folgenden aufeinanderfolgenden Schritte umfasst:
- Umspritzen des Gestells (20) auf die Befestigungsmittel (10);
- Umspritzen des Dämpfungskörpers (30) auf das Gestell (20), wobei der Dämpfungskörper (30) eine Hülse (36) aufweist, die einen Teil des Gestells (20) umgibt.

## Claims

1. Hanger (1) for connecting an exhaust line of a vehicle to the body of said vehicle, the hanger comprising:
- a frame (20);
- a damper body (30) made of elastomer material and having an oscillating part (31) intended to receive an attachment of an exhaust line and to move elastically relative to the frame (20) to dampen movements of the exhaust line;
- means for fixing (10) the hanger (1) to the body of the vehicle;
the frame (20) is overmolded on a part of the fixing means (10), and the damper body (30) is overmolded on the frame (20), **characterized in that** the damper body (30) has a sleeve (36) surrounding a part of the frame (20).

2. Hanger according to claim 1, **characterized in that** the overmolded damper body (30) partially covers the frame (20).

3. Hanger according to claim 1, **characterized in that** the frame (20) comprises at least two stops (21) for stopping the movements of the oscillating part (31) of the damper body (30).

4. Hanger according to claim 1, **characterized in that** the frame (20) is made of plastic material.

5. Hanger according to claim 1, **characterized in that** the frame (20) is peripheral and defines an interior space (22), the oscillating part (31) of the damper body (30) is positioned in the interior space (22), and the frame (20) has protruding parts (23) ensuring the retention of the overmolded damper body (30) on the frame (20).

6. Hanger according to claim 4, **characterized in that** the frame (20) is cylindrical in shape with radial ribs (24), for example defining a T, U, H-shaped section.

7. Hanger according to claim 4, **characterized in that** the damper body (30) comprises a peripheral part (32) covering the external surface (25) of the frame (20).

8. Hanger according to claim 6, **characterized in that** the oscillating part (31) is in the form of a sleeve connected by at least two, and preferably four, suspension arms (33) to the peripheral part (32) of the damper body (30).

9. Hanger according to claim 7, **characterized in that** the frame (20) has openings (26) through which the suspension arms (33) pass.

10. Method for manufacturing a hanger (1) intended to connect an exhaust line of a vehicle to the body of said vehicle, the hanger (1) comprising:
- a frame (20);
- a damper body (30) made of elastomer material and having an oscillating part (31) intended to receive an attachment of an exhaust line and to move elastically relative to the frame (20) to dampen movements of the exhaust line;
- means for fixing (10) the hanger (1) to the body of the vehicle;
the method being **characterized in that** it comprises the following successive steps:
- overmolding the frame (20) on the fixing means (10);
- overmolding the damper body (30) on the frame (20), the damper body (30) having a sleeve (36) surrounding a part of the frame (20)
